# EUROPEAN PATENT APPLICATION

(11) **EP 2 258 476 A1**
(43) Date of publication of application: **08.12.2010**
(21) Application number: 09726115.0
(22) Date of filing: 17.03.2009
(51) Int. Cl.: B01J 29/16, B01J 35/10, C10G 45/06, C10G 45/08, C10G 45/12, C10G 47/20

(54) **HYDROCRACKING CATALYST FOR HEAVY OIL**

(30) Priority: 28.03.2008 JP 2008088617
(71) Applicant: Petroleum Energy Center, A Juridical Incorporated Foundation, Minato-ku Tokyo 105-0001 (JP); Idemitsu Kosan Co., Ltd., Chiyoda-ku Tokyo 100-8321 (JP)
(72) Inventor: IINO, Akira, Ichihara-shi Chiba 299-0107 (JP); INAMURA, Kazuhiro, Sodegaura-shi Chiba 299-0293 (JP)
(74) Representative: HOFFMANN EITLE
(86) International application number: PCT/JP2009/055190
(87) International publication number: WO 2009/119390

(57) **Abstract**

A catalyst for hydrocracking of heavy oil which comprises a support comprising crystalline aluminosilicate and a porous inorganic oxide excluding the crystalline aluminosilicate and an active metal supported on the support, wherein (a) the support comprises the crystalline aluminosilicate in an amount of 18% by mass or greater and smaller than 45% by mass and the porous inorganic oxide in an amount exceeding 55% by mass and of 82% by mass or smaller based on a sum of the amount of the crystalline aluminosilicate and the amount of the porous inorganic aluminosilicate, (b) the active metal is at least one metal selected from molybdenum, tungsten and nickel, and (c) the distribution of pores in the catalyst for hydrocracking of heavy oil is such that a volume of pores having a diameter of 500 to 10,000 Å is 10% or smaller and a volume of pores having a diameter of 100 to 200 Å is 60% or greater based on a volume of entire pores having a diameter of 50 to 10,000 Å. The catalyst exhibits excellent desulfurizing function and excellent activity for decomposition of fractions having a high boiling point of 525°C or higher such as the vacuum residue.

## Description

### TECHNICAL FIELD

The present invention relates to a catalyst for hydrocracking of heavy oil and, more particularly, to a catalyst for hydrocracking of heavy oil which exhibits excellent desulfurizing function and excellent activity for decomposition of heavy oil.

### BACKGROUND ART

The atmospheric residue obtained from crude oil is hydrodesulfurized by an apparatus for direct desulfurization of fuel oil (hereinafter, referred to as "a direct desulfurization apparatus"), and distillates such as desulfurized naphtha, desulfurized kerosene and desulfurized gas oil and desulfurized fuel oil are formed. Desulfurized fuel oil is used as fuel for boilers for generation of electricity and others as low-sulfur fuel oil C. Desulfurized fuel oil is used also as the raw material used in fluid catalytic cracking (FCC) apparatuses, and light fractions such as fluid catalytically cracked gasoline (hereinafter, referred to as "FCC gasoline"), fluid catalytically cracked kerosene (hereinafter, referred to as "LCO", as the abbreviation of light cycle oil) and the LPG fraction are produced.
Recently, crude oil used as the raw material oil in the purification of oil is becoming heavier, and crude oil containing heavy oils in great amounts tends to be used more frequently as the raw material oil. Moreover, the amount of the demand for heavy oils is decreasing. For example, the demand for fuel oil for generation of electricity and for boilers is decreasing. The demand for the LCO fraction formed from the apparatus for fluid catalytic cracking is also decreasing. In contrast, the demand for gasoline is increasing, and the demand for the LPG fraction and the naphtha fraction used as the raw material for many petrochemical products such as propylene, butene and BTX including benzene, toluene and xylene is also increasing. Therefore, development of technology for producing light fractions such as gasoline, the naphtha fraction and the LPG fraction from heavy oil such as the atmospheric residue is important.

Under the above circumstances, hydrocracking processes in which desulfurized fuel oil and desulfurized heavy gas oil obtained by hydrocracking of heavy oil by a hydrodesulfurization apparatus such as a direct desulfurization apparatus and an indirect desulfurization apparatus are further decomposed to increase the amount of production of desulfurized naphtha, desulfurized kerosene and desulfurized gas oil have been developed. Conversion of the desulfurized fuel oil and desulfurized heavy gas oil into light fractions such as the LPG fraction, the FCC gasoline fraction and the LCO fraction by catalytic cracking with a great degree of conversion by a fluid catalytic cracking apparatus is conducted.
For example, a process in which an atmospheric residue is treated by hydrocracking to increase the yield of the desulfurized kerosene and gas oil fraction and the desulfurized naphtha fraction and decrease the amount of the desulfurized fuel oil, and the desulfurized fuel oil is treated by the fluid catalytic cracking apparatus to produce the LPG fraction, the FCC gasoline fraction and the LCO fraction so that the amount of the residue is decreased and the amount of the light oil fractions is increased as the result of the entire process, is proposed (for example, refer to Patent Reference 1).
In the above process, a catalyst comprising a support of crystalline aluminosilicate described, for example, in Patent Reference 2 is used as the catalyst for hydrocracking of heavy oil.
However, the use of the above catalyst has drawbacks in that the decrease in the content of sulfur is insufficient due to the poor ability of desulfurization, and that the activity for decomposition of components having high boiling points in the raw material such as the vacuum residue having a boiling point of 525°C or higher is small, and the yields of the light fractions are not sufficient.
Therefore, a catalyst for hydrocracking of heavy oil exhibiting excellent desulfurizing function and excellent activity for decomposition of fractions having a high boiling point of 525°C or higher such as the vacuum residue is required.

[Patent Reference 1] Japanese Patent Application Laid-Open No. Heisei 5(1993)-112785
[Patent Reference 2] Japanese Patent No. 2908959

### DISCLOSURE OF THE INVENTION

### [Problems to be Overcome by the Invention]

The present invention has been made under the above circumstances and has an object of providing a catalyst for hydrocracking of heavy oil exhibiting excellent desulfurizing function and excellent activity for decomposition of fractions having a high boiling point of 525°C or higher such as the vacuum residue.

### [Means for Overcoming the Problems]

As the result of intensive studies by the present inventors to achieved the above object, it was found that the above problem could be overcome with a catalyst using a support comprising a specific crystalline aluminosilicate and a porous inorganic oxide in specific relative amounts and having a specific distribution of pores. The present invention has been completed based on the knowledge.

The present invention provides:
[1] A catalyst for hydrocracking of heavy oil which comprises a support comprising crystalline aluminosilicate and a porous inorganic oxide excluding the crystalline aluminosilicate and an active metal supported on the support, wherein
   (a) the support comprises the crystalline aluminosilicate in an amount of 18% by mass or greater and smaller than 45% by mass and the porous inorganic oxide excluding the crystalline aluminosilicate in an amount exceeding 55% by mass and of 82% by mass or smaller based on a sum of the amount of the crystalline aluminosilicate and the amount of the porous inorganic aluminosilicate excluding the crystalline aluminosilicate, (b) the active metal is at least one metal selected from molybdenum, tungsten and nickel, and (c) a distribution of pores in the catalyst for hydrocracking of heavy oil is such that a volume of pores having a diameter of 500 to 10,000 Å is 10% or smaller and a volume of pores having a diameter of 100 to 200 Å is 60% or greater based on a volume of entire pores having a diameter of 50 to 10,000 Å;
[2] A catalyst for hydrocracking of heavy oil described in [1], which is used for a fixed bed hydrodesulfurization apparatus;
[3] A catalyst for hydrocracking of heavy oil described in any one of [1] and [2], wherein the crystalline aluminosilicate is USY zeolite or USY zeolite supporting a metal, and a main component of the porous inorganic oxide is alumina and
[4] A catalyst for hydrocracking of heavy oil described in any one of [1] to [3], wherein the crystalline aluminosilicate is USY zeolite supporting iron.

### THE EFFECT OF THE INVENTION

In accordance with the present invention, the catalyst for hydrocracking of heavy oil exhibiting excellent desulfurizing function and excellent activity for decomposition of fractions having a high boiling point of 525°C or higher such as the vacuum residue can be provided.

### THE MOST PREFERRED EMBODIMENT TO CARRY OUT THE INVENTION

The present invention provides a catalyst for hydrocracking of heavy oil which comprises a support comprising crystalline aluminosilicate and a porous inorganic oxide excluding the crystalline aluminosilicate (hereinafter, referred to as a porous inorganic oxide, occasionally) and an active metal supported on the support, wherein
(a) the support comprises the crystalline aluminosilicate in an amount of 18% by mass or greater and smaller than 45% by mass and the porous inorganic oxide excluding the crystalline aluminosilicate in an amount exceeding 55% by mass and of 82% by mass or smaller based on the sum of the amount of the crystalline aluminosilicate and the amount of the porous inorganic aluminosilicate, (b) the active metal is at least one metal selected from molybdenum, tungsten and nickel, and (c) the distribution of pores in the catalyst for hydrocracking of heavy oil is such that the volume of pores having a diameter of 500 to 10,000 Å is 10% or smaller and the volume of pores having a diameter of 100 to 200 Å is 60% or greater based on the volume of the entire pores having a diameter of 50 to 10,000 Å.

It is necessary that the catalyst for hydrocracking of heavy oil of the present invention be a catalyst which comprises a support comprising a mixture of crystalline aluminosilicate and a porous inorganic oxide and a metal supported on the support.
Various aluminosilicates can be used as the crystalline aluminosilicate described above. Examples of the crystalline aluminosilicate include faujasite of the hydrogen type, USY zeolite and USY zeolite supporting a metal. Among the above crystalline aluminosilicates, USY zeolite and USY zeolite supporting a metal are preferable, and USY zeolite supporting a metal is more preferable.
As the USY zeolite supporting a metal, USY zeolites supporting a metal which are USY zeolites supporting one or more metals selected from metals of Groups 3 to 16 of the Periodic Table are preferable, and USY zeolites supporting iron which supports iron as the metal is more preferable.

The USY zeolite and the USY zeolite supporting a metal described above can be produced, for example, in accordance with the process described in the following.
As the raw material for the USY zeolite, zeolite of the Y type containing silica and alumina in amounts such that ratio of the amounts by mole of silica to alumina, i.e., SiO₂/Al₂O₃, is 4.5 or greater and preferably 5.0 or greater and Na₂O in an amount of 2.4% by mass or smaller and preferably 1.8% by mass or smaller is used.
As the first step, zeolite of the Y type described above is treated by steaming to form the USY zeolites. The condition for the steaming treatment can be suitably selected in accordance with the circumstances. It is preferable that the treatment is conducted at a temperature of 510 to 810°C in the presence of steam. Steam may be introduced from the outside, or physically absorbed water or crystal water contained in zeolite of the Y type may be used. A mineral acid is added to the USY zeolite obtained after the steaming treatment, and the resultant mixture is treated by mixing under stirring so that aluminum is removed from the skeleton structure of zeolite and the zeolite is cleaned from the removed aluminum by the steaming and the treatment with the mineral acid.
As the mineral acid, various mineral acids can be used. In general, hydrochloric acid, nitric acid and sulfuric acid are used. As other mineral acids, inorganic acids such as phosphoric acid, perchloric acid, peroxodisulfonic acid, dithionic acid, sulfamic acid and nitrososulfonic acid and organic acids such as formic acid, trichloroacetic acid and trifluoroacetic acid can be used. The amount of the mineral acid to be added is 0.5 to 20 moles and preferably 3 to 16 moles per 1 kg of the USY zeolite. The concentration of the solution of the mineral acid is 0.5 to 50% by mass and preferably 1 to 20% by mass. The temperature of the treatment is in the range of the room temperature to 100°C and preferably 50 to 100°C. The time of the treatment is 0.1 to 12 hours.

Then, a solution of a metal salt is added to the obtained system so that the metal is supported on the USY zeolite. Examples of the process for supporting a metal include the treatment of mixing under stirring, the dipping process and the impregnation process. The treatment of mixing under stirring is preferable. Examples of the metal include yttrium and lanthanum of Group 3; zirconium and titanium of Group 4, vanadium, niobium and thallium of Group 5; chromium, molybdenum and tungsten of Group 6; manganese and rhenium of Group 7; iron, ruthenium and osmium of Group 8; cobalt, rhodium and iridium of Group 9; nickel, palladium and platinum of Group 10; copper of Group 11; zinc and cadmium of Group 12; aluminum and gallium of Group 13; tin of Group 14; phosphorus and antimony of Group 15; and selenium of Group 16; of the Periodic Table. Among these metals, titanium, iron, manganese, cobalt, nickel, palladium and platinum are preferable, and iron is more preferable.

As the salt of the metal, sulfates and nitrates are preferable. When the treatment with a solution of the metal salt is conducted, in general, the temperature of the treatment is 30 to 100°C and preferably 50 to 80°C, and the time of the treatment is 0.1 to 12 hours and preferably 0.5 to 5 hours although the condition is different depending on the circumstances and cannot be decided independently of the circumstances. It is preferable that the metal is supported on the support simultaneously when aluminum is removed from the skeleton structure of zeolite. The treatment of the supporting is conducted at a pH suitably selected in the range of 2.0 or smaller and preferably 1.5 or smaller. Examples of the type of the salt of iron include ferrous sulfate and ferric sulfate, and ferric sulfate is preferable. It is preferable that the sulfate of iron is added as a solution although the sulfate of iron may be added without being dissolved into a solvent. For the solvent dissolving the salt of iron, any solvent which can dissolve the salt of iron can be used. Water, alcohols, ethers and ketones are preferable as the solvent. The concentration of the sulfate of iron used for preparing the solution is, in general, 0.02 to 10.0 moles/liter and preferably 0.05 to 5.0 moles/liter.
When the crystalline aluminosilicate is treated by adding the mineral acid and the sulfate of iron, it is preferable that the slurry ratio, i.e., the volume (liter) of the solution for the treatment / the weight (kg) of aluminosilicate, is in the range of 1 to 50 and more preferably in the range of 5 to 30.
The crystalline aluminosilicate supporting a metal obtained as described above is washed with water and dried, where necessary.
USY zeolite and USY zeolite supporting a metal can be produced as described above.

Examples of the porous inorganic oxide constituting the support as a mixture with the crystalline aluminosilicate include alumina, silica-alumina, silica, alumina-boria, alumina-zirconia and aluminatitania. As the alumina, boehmite gel, alumina sol and alumina produced from these oxides are used. Among these oxides, alumina which can support the active metal in the highly dispersed condition is preferable.
A plurality of the porous inorganic oxides may be used as a mixture. In this case, it is preferable that alumina is used as the main component (the content of alumina is the greatest).

As the support in the catalyst for hydrocracking of heavy oil of the present invention, a mixture of the crystalline aluminosilicate such as USY zeolite and USY zeolite supporting a metal described above and the porous inorganic oxide described above is used. As for the relative amounts of the components in the mixture, it is necessary that the amount of the crystalline aluminosilicate is 18% by mass or greater and smaller than 45% by mass and the amount of the porous inorganic oxide exceeds 55% by mass and is 82% by mass or smaller based on the sum of the amount of the crystalline aluminosilicate and the amount of the porous inorganic aluminosilicate. When the amount of the crystalline aluminosilicate is excessively small in the mixture of the crystalline aluminosilicate and the porous inorganic oxide, a high temperature is required for the reaction to obtain the desired degree of decomposition, light fractions and intermediate fractions and, as the result, the life of the catalyst is adversely affected. When the amount of the crystalline aluminosilicate is excessively great, the activity in decomposition of heavier vacuum residues (hereinafter, referred to as VR (525+°C) fraction) is decreased, and the selectivity for the light fractions and the intermediate fractions is decreased although the activity in decomposition of the atmospheric residue (hereinafter, referred to as AR (343+°C) fraction) is increased.
On the other hand, the porous inorganic oxide such as alumina disperses the supported active metal to a great degree. When the relative amount of the porous inorganic oxide is excessively great, the desired yield of decomposition cannot be obtained and it becomes difficult to obtain the light fractions and the intermediate fractions since the relative amount of the crystalline aluminosilicate is decreased although the activity for hydrogenation is great and the activities of desulfurization, denitrogenation, removal of residual carbon, removal of asphaltene and removal of metals are increased. When the amount of the porous inorganic oxide is excessively small, a problem arises in that the activity for hydrogenation such as the activities of desulfurization, denitrogenation, removal of residual carbon, removal of asphaltene and removal of metals is decreased. Therefore, as the relative amounts of the crystalline aluminosilicate and the porous inorganic oxide in the catalyst, it is preferable that the amount of the crystalline aluminosilicate is 20% by mass or greater and smaller than 45% by mass and the amount of the porous inorganic oxide exceeds 55% by mass and is 80% by mass or smaller based on the sum of the amount of the crystalline aluminosilicate and the amount of the porous inorganic aluminosilicate. It is more preferable that the amount of the crystalline aluminosilicate is 25% by mass or greater and 43% by mass or smaller and the amount of the porous inorganic oxide is 57% by mass or greater and 75% by mass or smaller. It is most preferable that the amount of the crystalline aluminosilicate is 30% by mass or greater and 40% by or smaller and the amount of the porous inorganic oxide is 60% by mass or greater and 70% by mass or smaller.
It is preferable that the support in the catalyst for hydrocracking of heavy oil of the present invention is composed of the crystalline aluminosilicate and the porous inorganic oxide described above alone. However, where necessary, a third component such as a clay mineral and phosphorus may be mixed into the support. When the third component is mixed, it is preferable that the amount of the third component is 1 to 30% by mass and more preferably 3 to 25% by mass based on the sum of the amount of the crystalline aluminosilicate, the amount of the porous inorganic oxide and the amount of the third component, which is set at 100%. When the amount of the third component exceeds 30% by mass, there is the possibility that the surface area of the support is decreased, and the activity of the catalyst is not sufficiently exhibited. When the amount of the third component is smaller than 1% by mass, there is the possibility that the effect expected by the addition of the third component is not exhibited.

For producing the support in the catalyst for hydrocracking of heavy oil of the present invention, it is preferable that the crystalline aluminosilicate such as USY zeolite and USY zeolite supporting a metal described above is used in the condition of a slurry containing water after the washing with water. The crystalline aluminosilicate and the porous inorganic oxide are sufficiently mixed with each other in the presence of a sufficient amount of water using a kneader (a mixer).
The porous inorganic oxide is in the condition of a gel or a sol. The porous inorganic oxide is formed into a slurry by adding water similarly to the crystalline aluminosilicate and mixed with the crystalline aluminosilicate. It is preferable that the content of water in the slurry of the crystalline aluminosilicate is 30 to 80% by mass and more preferably 40 to 70% by mass, and the content of water in the slurry of the porous inorganic oxide is 50 to 90% by mass and more preferably 55 to 85% by mass.
After the crystalline aluminosilicate and the porous inorganic silicate are mixed by kneading as described above, the mixture is formed into molded products having a diameter of 1/12 inch to 1/32 inch and a length of 1.5 to 6 mm in a cylinder shape, a three-leaf shape or a four-leaf shape. The molded products are dried at 30 to 200°C for 0.1 to 24 hours and then baked at 300 to 750°C (preferably at 450 to 700°C) for 1 to 10 hours (preferably 2 to 7 hours) to obtain a support.

Then, at least one metal selected from metals of Groups 6, 8, 9 and 10 of the Periodic Table is supported on the support. As the metal belonging to Group 6 of the Periodic Table, molybdenum and tungsten are preferable. As the metal belonging to Groups 8 to 10, nickel and cobalt are preferable. Examples of the combination of two metals include combinations of nickel-molybdenum, cobalt-molybdenum, nickel-tungsten and cobalt-tungsten. Among these combinations, the combinations of cobalt-molybdenum and nickel-molybdenum are preferable, and the combination of nickel-molybdenum is more preferable.
The amount of the metal supported on the support is not particularly limited and can be suitably selected in accordance with various conditions such as the type of the raw material oil and the desired yield of the naphtha fraction. In general, the amount of the metal of Group 6 is 0.5 to 30% by mass and preferably 5 to 20% by mass of the amount of the entire catalyst, and the amount of the metal of Groups 8 to 10 is 0.1 to 20% by mass and preferably 1 to 10% by mass of the amount of the entire catalyst.

The process for supporting the metal component on the support is not particularly limited, and a conventional process such as the impregnation process, the mixing process and the coprecipitation process can be used.
The product obtained by supporting the metal component on the support is dried, in general, at 30 to 200°C for 0.1 to 24 hours and then baked at 250 to 700°C (preferably at 300 to 650°C) for 1 to 10 hours (preferably 2 to 7 hours) to obtain the desired catalyst.

It is necessary that the catalyst for hydrocracking of heavy oil of the present invention have the distribution of pores described in the following. In the catalyst for hydrocracking of heavy oil of the present invention, the volume of pores having a diameter of 500 to 10,000 Å, which are macro pores, is 10% or smaller and preferably 5% or smaller based on the volume of the entire pores having a diameter of 50 to 10,000 Å, which are the entire pores in the catalyst, and the volume of pores having a diameter of 100 to 200 Å, which are meso pores, is 60% or greater and preferably 70% or greater based on the volume of the entire pores in the catalyst.
It is preferable that the volume of pores having a diameter of 100 to 200 Å occupies 70% or greater of the volume of pores having a diameter of 50 to 500 Å.
The catalyst having the distribution of pores described above can control diffusion of hydrocarbons having great molecular weights such as asphaltene fractions in the residue to make the diffusion easier, and hydrogenation and decomposition of heavy oil can be facilitated.
In the present invention, the volume of pores having a diameter of 50 Å or greater in the catalyst is measured corresponding to the diameter of the pores in the catalyst. The volume is measured in accordance with the method of mercury injection described in ASTM D4284-03. In the present invention, the contact angle of mercury is set at 140 degrees, and the surface tension of mercury is set at 480 dyne/cm for the calculation.

It is preferable that the catalyst for hydrocracking of heavy oil of the present invention satisfies the following conditions.

### (1) Specific surface area

It is preferable that the catalyst for hydrocracking of heavy oil of the present invention has a specific surface area of 200 to 600 m²/g and more preferably 250 to 450 m²/g. When the specific surface area is 200 m²/g or greater, the active point suitable for decomposing heavy oil can be disposed on the surface of the catalyst in an amount sufficient for exhibiting the activity for decomposition. When the specific surface area is 600 m²/g or smaller, the catalyst can have pores sufficiently great for diffusion of molecules of heavy oil. The specific surface area is measured and analyzed in accordance with the conventional BET method of nitrogen adsorption (ASTM D4365-95). In the analysis of a crystalline aluminosilicate and a sample in the form of the catalyst, as the preliminary treatment, contained water is sufficiently removed by heating at 400°C for 3 hours under a vacuum while gases were discharged to the outside. As for the range of P/PO in the calculation of the surface area from the BET plot, five points between 0.01 to 0.10 are interpolated for the calculation.
The method of the measurement described above is used also for the measurement of the specific surface area of the crystalline aluminosilicate constituting the catalyst for hydrocracking of heavy oil used in the present invention.

### (2) Volume of the entire pores

It is preferable that the volume of the entire pores in the catalyst obtained in accordance with the method of nitrogen gas adsorption is 0.50 cc/g or greater and more preferably 0.55 cc/g or greater. When the volume of the entire pores is 0.50 cc/g or greater, diffusion of molecules of heavy oil such as the vacuum residue can be increased.
The volume of the entire pores in the crystalline aluminosilicate and in the entire catalyst is calculated based on the adsorption-desorption isotherm of nitrogen (ASTM D4222-03, D4641-94). As the preliminary treatment, contained water is sufficiently removed by heating at 400°C for 3 hours under a vacuum while gases were discharged to the outside. The volume of the entire pores is obtained from the amount of adsorbed nitrogen at P/PO=0.99 in the adsorption-desorption isotherm of nitrogen, followed by converting the obtained amount into the volume.

The catalyst for hydrocracking of heavy oil of the present invention exhibits an increased activity for hydrogenation of heavy fractions. The activity for decomposition of the fraction having a boiling point of 525°C or higher (the VR fraction) is great, and the activity for decomposition of fractions having a boiling point of 343°C or higher (the AR fraction) is also relatively great. Moreover, the catalyst exhibits a great activity for removing residual carbon, desulfurization and denitrogenation. Therefore, when the hydrocracking is conducted using this catalyst, the properties of the obtained desulfurized heavy oils (DSAR, i.e., the desulfurized atmospheric residue, and DSVGO, i.e., the desulfurized vacuum gas oil) are advantageous as the raw material used in the apparatus for fluidized catalytic cracking.

The catalyst for hydrocracking of heavy oil of the present invention is used for the hydrocracking. Hydrodesulfurization, hydrodenitrogenation and hydrodemetalation are conducted simultaneously with the hydrocracking. These reactions are conducted under the condition of a high pressure of hydrogen. As the apparatus for conducting the hydrocracking under a high pressure, in general, an apparatus for direct desulfurization is used.

The condition in the hydrocracking using the catalyst for hydrocracking of heavy oil of the present invention is not particularly limited, and the conventional reaction condition for hydrocracking and hydrodesulfurization of heavy oil is sufficient. The temperature of the reaction can be selected preferably in the range of 320 to 550°C and more preferably in the range of 350 to 430°C; the partial pressure of hydrogen can be selected preferably in the range of 1 to 30 MPa and more preferably in the range of 5 to 17 MPa; the ratio of the amounts of hydrogen to oil can be selected preferably in the range of 100 to 2,000 Nm³/kl and more preferably in the range of 300 to 1,000 Nm³/kl; and the liquid hour space velocity (LHSV) can be selected preferably in the range of 0.1 to 5 h⁻¹ and more preferably in the range of 0.2 to 2.0 h⁻¹.
Heavy oils such as the vacuum residue, coker oil, synthetic crude oil, topped crude oil, heavy gas oil, vacuum gas oil, LCO, HCO (heavy cycle oil), CLO (clarified oil), GTL oil and wax may be treated by the hydrocracking as a mixture with the atmospheric residue.

The catalyst for hydrocracking of heavy oil of the present invention may be used singly or in combination with conventional catalysts for hydrogenation. As the pattern of the combination, for example, it is preferable that 10 to 40% by volume of a demetalation catalyst is packed into the first stage, 0 to 50% by volume of a desulfurization catalyst is packed into the second stage, 10 to 70% by volume of the catalyst for hydrocracking of heavy oil of the present invention is packed into the third stage, and 0 to 40% by volume of a desulfurization catalyst for the finishing is packed into the fourth stage, each based on the amount of the entire packed catalysts. The pattern of the packing may be changed in various ways in accordance with the properties of the raw material oil. A catalyst for removing scales for removing scales of iron powder and inorganic oxides contained in the raw material oil may be packed into a stage before the demetalation catalyst of the first stage.

The catalyst for hydrocracking of heavy oil of the present invention can be utilized, for example, as described in the following.
Using the catalyst for hydrocracking of heavy oil of the present invention, an atmospheric residue is treated by hydrocracking, and the fluidized catalytic cracking is conducted using the residue of the obtained oil or a mixture of the residue with a distillate as the raw material oil.
In this case, as the distillate, a distillate having a boiling point of 120 to 400°C is preferable, and a distillate having a boiling point of 150 to 350°C are more preferable. When the distillate has the boiling point in the above range, decomposition products having the boiling point in the advantageous range can be obtained, and the effect of increasing the amount of the FCC gasoline is exhibited. It is preferable that the amount of the distillate in the raw material for the fluidized catalytic cracking is 1 to 30% by volume and more preferably 3 to 20% by volume. When the amount is in the above range, the effect of excellently increasing the LPG fraction and the FCC gasoline fraction can be exhibited.

The condition of the catalytic cracking is not particularly limited, and the catalytic cracking can be conducted in accordance with a conventional process under a conventional condition. For example, using an amorphous catalyst such as silica-alumina and silica-magnesia or a zeolite catalyst such as crystalline aluminosilicate of the faujasite type, the condition can be suitably selected in the following ranges: a temperature of the reaction in the range of 450 to 650°C and preferably in the range of 480 to 580°C; a temperature of regeneration in the range of 550 to 760°C; and a pressure of reaction in the range of 0.02 to 5 MPa and preferably in the range of 0.2 to 2 MPa.

In the treatment for decomposition of the atmospheric residue described above, the amounts of the products can be adjusted so that the amounts of the FCC gasoline fraction and the LPG fraction useful as the fuel and the raw material for petrochemical products are increased, and the amount of the LCO fraction having limited demand is decreased.
Moreover, the yield of the kerosene and gas oil fraction which is the intermediate fraction and the naphtha fraction which is a light fraction in the product formed by the hydrocracking by the apparatus for the direct desulfurization as an intermediate stage are increased and can be utilized as the fuel and the raw material for petrochemical products.

The present invention will be described more specifically with reference to examples in the following. However, the present invention is not limited to the examples.
In Examples and Comparative Examples, an atmospheric residue of Arabian heavy exhibiting the properties shown in Table 1 was used as the raw material.

**Table 1**

| | Item (unit) | Value | Standard |
|---|---|---|---|
| Property | | | |
| | sulfur (air method using burning tube) (% by mass) | 4.42 | JIS K 2541-3 |
| | nitrogen (chemical light emission method) (ppm by mass) | 2,720 | JIS K 2609 |
| | vanadium (ppm by mass) | 86 | JPI-5S-62-2000 |
| | nickel (ppm by mass) | 27 | JPI-5S-62-2000 |
| | components insoluble in C7 (% by mass) | 7.9 | UOP 614-80 |
| | residual carbon (micro method) (% by mass) | 14.1 | JIS K 2270 |
| | density (vibration method) @15°C (g/cm³) | 0.9939 | JIS K 2249 |
| | kinematic viscosity @50°C (mm²/s) | 3070 | JIS K 2283 |
| | Hcont. (concentration of hydrogen) (% by mass) | 1086 | JPI-5S-65-2004 |

| Distribution of fractions | | | |
|---|---|---|---|
| | naphtha (C₅∼150°C) (% by mass) | 0.0 | method of gas |
| | kerosene fraction (150∼250°C) (% by mass) | 0.0 | chromatography |
| | gas oil fraction (250∼343°C) (% by mass) | 3.3 | with |
| | vacuum gas oil fraction (343∼525°C) (% by mass) | 36.7 | distillation |
| | vacuum residues (525⁺°C) (% by mass) | 60.0 | ASTM |
| | residues (343⁺°C) (% by mass) | 96.7 | D 5307-97 |

The preparation of catalysts for hydrocracking of heavy oil used in Examples and Comparative Examples and the evaluation of the properties of the prepared catalysts were conducted as described in the following.

### 1. Preparation of catalysts

### [Catalyst for hydrocracking of heavy oil I]

### (1) Preparation of a crystalline aluminosilicate

Zeolite of the Na-Y type (the content of Na₂O: 13.3% by mass; SiO₂/Al₂O_{S} (the ratio by mole): 5.0) was treated by the ion exchange into the ammonium type, and zeolite of the NH₄-Y type (the content of Na₂O: 1.3% by mass) was obtained. The obtained zeolite was treated by steaming at 650°C, and zeolite of the steaming Y type was formed. After 10 kg of the formed zeolite of the steaming Y type was suspended in 115 liters of pure water, the obtained suspension was heated at 75°C and stirred for 30 minutes. To the suspension, 63.7 kg of a 10% by mass solution of sulfuric acid was added over 35 minutes and, then, 11.5 kg of a solution of ferric sulfate having a concentration of 0.57 moles/liter was added over 10 minutes. The mixture obtained by the addition was stirred for 30 minutes, filtered and washed, and USY zeolite slurry supporting iron I having a concentration of solid components of 30.5% by mass was obtained. The lattice constant obtained in accordance with the X-ray diffraction method was 24.30 Å.

### (2) Preparation of an alumina slurry

Into a vessel, 80 kg of a solution of sodium aluminate (the concentration: 5.0% by mass expressed as the concentration of Al₂O₃) and 240 g of a 50% by mass solution of gluconic acid were placed and heated at 60°C. A solution of aluminum sulfate (the concentration: 2.5% by mass expressed as the concentration of Al₂O₃) in an amount of 88 kg was placed in another vessel and, then, added to the above solution in 15 minutes in a manner such that pH was adjusted at 7.2, and a slurry of aluminum hydroxide was obtained. The obtained slurry of aluminum hydroxide was aged for 60 minutes while the slurry was kept at 60°C, filtered to remove water and washed with ammonia water, and an alumina cake was obtained. Using a portion of the obtained alumina cake, pure water and 15% by mass ammonia water, a slurry having a concentration of alumina of 12.0% by mass and a pH of 10.5 was obtained. The obtained slurry was placed in an aging tank and aged at 95°C for 8 hours under stirring. Pure water was added to the aged slurry so that the slurry was diluted to have a concentration of alumina of 9.0% by mass. Then, the resultant slurry was transferred to an autoclave equipped with a stirrer, aged at 145°C for 5 hours and then concentrated by heating while ammonia was removed simultaneously, and a slurry having a concentration of 20% by mass expressed as the concentration of Al₂O₃ was obtained. Alumina slurry A was obtained as described above.

### (3) Preparation of a catalyst

USY zeolite slurry supporting iron I (the concentration: 30.5% by mass) in an amount of 738 g and 2,625 g of Alumina slurry A (the concentration: 20% by mass) were added into a kneader. After the mixed slurry was concentrated under heating and stirring to have a concentration which make the extrusion possible, the concentrated slurry was extruded to form pellets having a four-leaf shape of 1/18 inch size. The obtained pellets were dried at 110°C for 16 hours and baked at 550°C for 3 hours, and Support I having a composition of USY zeolite supporting iron / alumina of 30/70 (expressed as the ratio of the amounts by mass of solid components) was obtained.
Then, a suspension obtained by suspending molybdenum trioxide and nickel carbonate in pure water was heated at 90°C, and malic acid was added to the suspension to obtain a solution. Support I was impregnated with the obtained solution so that the concentration of molybdenum expressed as MoO₃ was 10.5% by mass and the concentration of nickel expressed as NiO was 4.25% by mass in the entire catalyst. The obtained product was dried and baked at 550°C for 3 hours, and Catalyst for hydrocracking of heavy oil I was obtained. The obtained catalyst had a specific surface area of 381 m²/g and a volume of the entire pores of 0.62 cc/g. The volume of pores having a diameter of 500 to 10,000 Å was 1% of the volume of the entire pores having a diameter of 50 to 10,000 Å, and the volume of pores having a diameter of 100 to 200 Å was 73% of the volume of the entire pores having a diameter of 50 to 10,000 Å, as measured in accordance with the mercury injection method. The composition and the physical properties of the catalyst are shown in Table 2.

### [Catalyst for hydrocracking of heavy oil II]

In accordance with the same procedures as those conducted in the preparation of Catalyst for hydrocracking of heavy oil I except that 1,148 g of USY zeolite slurry supporting iron I (the concentration: 30.5% by mass) and 2,625 g of Alumina slurry A (the concentration: 20% by mass) were added into a kneader, Support II having a composition of USY zeolite supporting iron / alumina of 40/60 (expressed as the ratio of the amounts by mass of solid components) was obtained.
Then, a suspension obtained by suspending molybdenum trioxide and nickel carbonate in pure water was heated at 90°C, and malic acid was added to the suspension to obtain a solution. Support II was impregnated with the obtained solution so that the concentration of molybdenum expressed as MoO₃ was 10.5% by mass and the concentration of nickel expressed as NiO was 4.25% by mass in the entire catalyst. The obtained product was dried, baked at 550°C for 3 hours, and Catalyst for hydrocracking of heavy oil II was obtained. The obtained catalyst had a specific surface area of 409 m²/g and a volume of the entire pores of 0.60 cc/g. The volume of pores having a diameter of 500 to 10,000 Å was 2% of the volume of the entire pores having a diameter of 50 to 10,000 Å, and the volume of pores having a diameter of 100 to 200 Å was 79% of the volume of the entire pores having a diameter of 50 to 10,000 Å, as measured in accordance with the mercury injection method. The composition and the physical properties of the catalyst are shown in Table 2.

### [Catalyst for hydrocracking of heavy oil III]

In accordance with the same procedures as those conducted in the preparation of Catalyst for hydrocracking of heavy oil I except that 1,230 g of USY zeolite slurry supporting iron I (the concentration: 30.5% by mass) and 1,876 g of Alumina slurry A (the concentration: 20% by mass) were added into a kneader, Support III having a composition of USY zeolite supporting iron / alumina of 50/50 (expressed as the ratio of the amounts by mass of solid components) was obtained.
Then, a suspension obtained by suspending molybdenum trioxide and nickel carbonate in pure water was heated at 90°C, and malic acid was added to the suspension to obtain a solution. Support III was impregnated with the obtained solution so that the concentration of molybdenum expressed as MoO₃ was 10.5% by mass and the concentration of nickel expressed as NiO was 4.25% by mass in the entire catalyst. The obtained product was dried, baked at 550°C for 3 hours, and Catalyst for hydrocracking of heavy oil III was obtained. The obtained catalyst had a specific surface area of 473 m²/g and a volume of the entire pores of 0.61 cc/g. The volume of pores having a diameter of 500 to 10,000 Å was 10% of the volume of the entire pores having a diameter of 50 to 10,000 Å, and the volume of pores having a diameter of 100 to 200 Å was 59% of the volume of the entire pores having a diameter of 50 to 10,000 Å, as measured in accordance with the mercury injection method. The composition and the physical properties of the catalyst are shown in Table 2.

### [Catalyst for hydrocracking of heavy oil IV]

In accordance with the same procedures as those conducted in the preparation of Catalyst for hydrocracking of heavy oil I except that 1,476 g of USY zeolite slurry supporting iron I (the concentration: 30.5% by mass) and 1,500 g of Alumina slurry A (the concentration: 20% by mass) were added into a kneader, Support IV having a composition of USY zeolite supporting iron / alumina of 60/40 (expressed as the ratio of the amounts by mass of solid components) was obtained.

Then, a suspension obtained by suspending molybdenum trioxide and nickel carbonate in pure water was heated at 90°C, and malic acid was added to the suspension to obtain a solution. Support IV was impregnated with the obtained solution so that the concentration of molybdenum expressed as MoO₃ was 10.5% by mass and the concentration of nickel expressed as NiO was 4.25% by mass in the entire catalyst. The obtained product was dried, baked at 550°C for 3 hours, and Catalyst for hydrocracking of heavy oil IV was obtained. The obtained catalyst had a specific surface area of 517 m²/g and a volume of the entire pores of 0.56 cc/g. The volume of pores having a diameter of 500 to 10,000 Å was 32% of the volume of the entire pores having a diameter of 50 to 10,000 Å, and the volume of pores having a diameter of 100 to 200 Å was 43% of the volume of the entire pores having a diameter of 50 to 10,000 Å, as measured in accordance with the mercury injection method. The composition and the physical properties of the catalyst are shown in Table 2.

### [Catalyst for hydrocracking of heavy oil V]

Boric acid was added to Alumina slurry A in an amount such that the ratio of amounts by mass Al₂O₃/B₂O₃ was 85/15, and a slurry of alumina and boric acid was obtained. In accordance with the same procedures as those conducted in the preparation of Catalyst for hydrocracking of heavy oil I except that the slurry of alumina and boric acid obtained above was used in place of Alumina slurry A, Support V having a composition of USY zeolite supporting iron / alumina / boria of 20/68/12 (expressed as the ratio of the amounts by mass of solid components) was obtained.
Catalyst for hydrocracking of heavy oil V was obtained in accordance with the same procedures as those conducted in the preparation of Catalyst for hydrocracking of heavy oil I except that the concentration of molybdenum expressed as MoO₃ was adjusted at 15.0% by mass and the concentration of nickel expressed as NiO was adjusted at 4.2% by mass. The obtained catalyst had a specific surface area of 270 m²/g and a volume of the entire pores of 0.51 cc/g. The volume of pores having a diameter of 500 to 10,000 Å was 1% of the volume of the entire pores having a diameter of 50 to 10,000 Å, and the volume of pores having a diameter of 100 to 200 Å was 73% of the volume of the entire pores having a diameter of 50 to 10,000 Å, as measured in accordance with the mercury injection method. The composition and the physical properties of the catalyst are shown in Table 2.

**Table 2**

| | | Cat I* | Cat II* | Cat III* | Cat IV* | Cat V* |
|---|---|---|---|---|---|---|
| Component of catalyst | | | | | | |
| | support | | | | | |
| | crystalline aluminosilicate | | | | | |
| | type | USY supporting iron (sulfuric acid process) | | | | |
| | relative amount in support (% by mass) | 30 | 40 | 50 | 60 | 20 |
| | metal oxide | Fe₂O₃ | Fe₂O₃ | Fe₂O₃ | Fe₂O₃ | Fe₂O₃ |
| | content (based on oxide) (% by mass) | 2.5 | 2.5 | 2.5 | 2.5 | 2.5 |
| | SiO₂/Al₂O₃ (ratio by mole) | 36 | 36 | 36 | 36 | 36 |
| | lattice constant (Å) | 24.30 | 24.30 | 24.30 | 24.30 | 24.30 |
| | degree of crystallization | 0.91 | 0.91 | 0.91 | 0.91 | 0.91 |
| | specific surface area (m²/g) | 840 | 840 | 840 | 840 | 840 |
| | volume of entire pores (cc/g) | 0.54 | 0.54 | 0.54 | 0.54 | 0.54 |
| alumina | | | | | | |
| | alumina slurry | A | A | A | A | A |
| | fraction in support (% by mass) | 70 | 60 | 50 | 40 | 68 |
| boria | | | | | | |
| | fraction in support (% by mass) | 0 | 0 | 0 | 0 | 0 |
| active metal | | | | | | |
| | metal oxide | NiO- | NiO- | NiO- | NiO- | NiO- |
| | | MoO₃ | MoO₃ | MoO₃ | MoO₃ | MoO₃ |
| | content (based on oxide) | 4.25- | 4.25- | 4.25- | 4.25- | 4.2- |
| | (% by mass) | 10.5 | 10.5 | 10.5 | 10.5 | 15.0 |
| Physical property of catalyst | | | | | | |
| | nitrogen adsorption method | | | | | |
| | volume of entire pores (cc/g) | 0.62 | 0.60 | 0.61 | 0.56 | 0.51 |
| | specific surface area (m²/g) | 381 | 410 | 473 | 517 | 270 |
| Mercury injection method | | | | | | |
| | volume of entire pores** (cc/g) | 0.474 | 0.453 | 0.461 | 0.475 | 0.414 |
| | volume of non macro pores** (cc/g) | 0.467 | 0.450 | 0.413 | 0.325 | 0.403 |
| | volume of meso pores** (cc/g) | 0.344 | 0.360 | 0.270 | 0.206 | 0.305 |
| | volume of macro pores** (cc/g) | 0.007 | 0.007 | 0.048 | 0.150 | 0.005 |
| | fraction of 500∼10,000 Å*** (%) | 1 | 2 | 11 | 32 | 1 |
| | fraction 1 of 100∼200 Å*** (%) | 73 | 79 | 59 | 43 | 73 |
| | fraction 2 of 100∼200 A*** (%) | 74 | 80 | 65 | 63 | 76 |

| | | | | | | |
|---|---|---|---|---|---|---|
| Notes: * Cat I: Catalyst for hydrocracking of heavy oil I Cat II: Catalyst for hydrocracking of heavy oil II Cat III: Catalyst for hydrocracking of heavy oil III Cat IV: Catalyst for hydrocracking of heavy oil IV Cat V: Catalyst for hydrocracking of heavy oil V ** entire pores: pores having a diameter of 50∼10,000 Å non-macro pores: pores having a diameter of 50∼500 Å meso pores: pores having a diameter of 100∼200 Å macro pores: pores having a diameter of 500∼10,000 Å *** fraction of 500∼10,000 Å: fraction of pores having a diameter of 500∼10,000 Å in pores having a diameter of 50 to 10,000 Å fraction 1 of 100-200 Å: fraction of pores having a diameter of 100∼200 Å in pores having a diameter of 50 to 10, 000 Å fraction 2 of 100∼200 A: fraction of pores having a diameter of 100∼200 Å in pores having a diameter of 50 to 500 Å | | | | | | |

### 2. Method of evaluation of physical properties of USY zeolites supporting iron (crystalline aluminosilicates) and catalysts

### (1) Lattice constant:

USY zeolite supporting iron which had been dried and powder of silicon as the internal reference material were mixed well, pulverized and packed into a sample holder for X-ray powder diffraction (XRD). The measurement on the thus prepared sample was conducted using a Cu bulb under an applied voltage of 40 KV and an applied electric current of 40 mA in accordance with the step scanning, and the lattice constant (UD) of the USY zeolite supporting iron was calculated from the obtained peak angle.

### (2) Degree of crystallization

The degree of crystallization was evaluated in accordance with the method of ASTM D3906-03. The crystallinity as the zeolite of the Y type was calculated and expressed as the relative degree of crystallization based on the degree of crystallization of LINE SK-40 used as the reference, which was set at 100%.

### (3) Volume of pores

The volume of pores was obtained as described above.

### (4) Specific surface area and volume of entire pores

The specific surface area and the volume of the entire pores were obtained as described above.

### [Evaluation of activity for hydrocracking of a catalyst for hydrocracking of heavy oil]

### Example 1

Catalyst for hydrocracking of heavy oil I in an amount of 100 cc was packed into a high pressure fixed bed reactor, treated by sulfurization and subjected to hydrocracking using an atmospheric residue of Arabian heavy shown in Table 1 as the raw material oil under the following condition:
The condition of the hydrocracking
   temperature of the reaction (WAT: weight-average
   temperature): 400°C
   liquid hour space velocity (LHVS): 0.3 h⁻¹
   partial pressure of hydrogen: 12.9 MPa (130 kg/cm²)
   hydrogen/oil ratio: 1,000 Nm³/kl

The product oil obtained by the above hydrocracking (hereinafter, referred to as the product oil, occasionally) was analyzed in accordance with the method of the gas chromatography with distillation (ASTM D 5307-97), and the yields of the fractions such as the fraction having a boiling point of higher than 343°C and 525°C or lower, the fraction having a boiling point of 525⁺°C (a boiling point higher than 525°C) and the kerosene and gas oil fraction as the intermediate fraction (the range of the boiling point: 150 to 343°C) were obtained. Then, the 343⁺°C conversion and the 525⁺°C conversion defined in the following were obtained. The results are shown in Table 3. Greater values of the yield and the conversion of the intermediate fraction mean greater activity of hydrocracking of the catalyst for hydrocracking of heavy oil of the present invention. The raw material oil in the following definition is the atmospheric residue of Arabian heavy shown in Table 1.
343⁺°C conversion (% by mass) = (residue in raw material oil - residue in product) / residue in raw material oil
525+°C conversion (% by mass) = (vacuum residue in raw material oil - residue in product) / vacuum residue in raw material oil

The activity of desulfurization, the activity of denitrogenation, the activity of removing residual carbon, the activity of removing asphaltene and the activity of removing metals were evaluated in accordance with the methods of measurement and the definitions described in the following and calculated in accordance with conventional methods. The results are shown in Table 3.
In the product oil obtained by hydrocracking described above (hereinafter, referred to as the product oil, occasionally), the content of sulfur was measured in accordance with the excitation method using radiation (JIS K 2541-4), the content of nitrogen was measured in accordance with the chemical light emission method (JIS K 2609), the contents of vanadium and nickel were measured in accordance with the fluorescent X-ray method (JPI-5S-62-2000), the content of components insoluble in C7 was measured in accordance with the method of UOP 614-80, and the content of residual carbon was measured in accordance with the micro method (JIS K 2270). The atmospheric residue of Arabian heavy shown in Table 1 (hereinafter, referred to as the raw material oil, occasionally) was evaluated in accordance with the same methods except that the content of sulfur was measured in accordance with the air method using a burning tube (JIS K 2541-3).
Activity of desulfurization (% by mass) = (content of sulfur in raw material oil - content of sulfur in product oil) / content of sulfur in raw material oil
Activity of denitrogenation (% by mass) = (content of nitrogen in raw material oil - content of nitrogen in product oil) / content of nitrogen in raw material oil
Activity of removing residual carbon (% by mass) = (content of residual carbon in raw material oil - content of
residual carbon in product oil) / content of residual carbon in raw material oil
Activity of removing asphaltene (% by mass) =
(content of components insoluble in C7 in raw material oil - content of components insoluble in C7 in product oil) / content of components insoluble in C7 in raw material oil
Activity of removing metals (% by mass) =
(sum of contents of V and Ni in raw material oil - sum of contents of V and Ni in product oil) / sum of contents of V and Ni in raw material oil

### Example 2

The hydrocracking was conducted in accordance with the same procedures as those conducted in Example 1 except that Catalyst for hydrocracking of heavy oil II was used in place of Catalyst for hydrocracking of heavy oil I used in Example 1. The results are shown in Table 3.

### Example 3

The hydrocracking was conducted in accordance with the same procedures as those conducted in Example 1 except that Catalyst for hydrocracking of heavy oil V was used in place of Catalyst for hydrocracking of heavy oil I used in Example 1. The results are shown in Table 3.

### Comparative Example 1

The hydrocracking was conducted in accordance with the same procedures as those conducted in Example 1 except that Catalyst for hydrocracking of heavy oil III was used in place of Catalyst for hydrocracking of heavy oil I used in Example 1. The results are shown in Table 3.

### Comparative Example 2

The hydrocracking was conducted in accordance with the same procedures as those conducted in Example 1 except that Catalyst for hydrocracking of heavy oil IV was used in place of Catalyst for hydrocracking of heavy oil I used in Example 1. The results are shown in Table 3.

### Comparative Example 3

The hydrocracking was conducted in accordance with the same procedures as those conducted in Example 1 except that a commercial catalyst for desulfurization was used in place of Catalyst for hydrocracking of heavy oil I used in Example 1. The results are shown in Table 3.

**Table 3**

| Example | 1 | 2 | 3 | | | |
|---|---|---|---|---|---|---|
| Comparative Example | | | | 1 | 2 | 3 |
| [Results of hydrocracking] (unit: % by mass) | | | | | | |
| 343⁺°C conversion | 27 | 29 | 27 | 33 | 40 | 23 |
| 525⁺°C conversion | 50 | 49 | 51 | 43 | 43 | 50 |
| yield of intermediate fraction (150∼343°C) | 22 | 22 | 23 | 24 | 26 | 18 |
| Activity for desulfurization | 93 | 92 | 94 | 91 | 82 | 95 |
| Activity for denitrogenation | 71 | 73 | 73 | 66 | 53 | 63 |
| Activity for removing residual carbon | 83 | 71 | 83 | 67 | 55 | 74 |
| Activity for removing asphaltene | 68 | 65 | 65 | 78 | 73 | 81 |
| Activity for removing metals | 75 | 62 | 70 | 77 | 82 | 86 |

It is shown by the results in Table 3 that the process for hydrocracking of the atmospheric residue of the present invention (Examples 1 and 2) exhibited remarkably greater conversions of the VR fraction in the hydrocracking than that of Comparative Example 1 which did not use the catalyst for hydrocracking of heavy oil of the present invention although the conversions of the AR fraction were somewhat smaller. It is also shown that the activity for desulfurization, the activity for denitrogenation and the activity for removing residual carbon were at the most excellent level.
In contrast, in the process conducted in Comparative Example 2 in which the relative amount of the crystalline aluminosilicate in the catalyst for hydrocracking of heavy oil was 60% by mass, the activity for desulfurization, the activity for denitrogenization and the activity for removing residual carbon were smaller and the quality of the obtained desulfurized oil (DSAR and DSVGO) was inferior although the conversion of the AR fraction in the hydrocracking was greater. In the process using a commercial catalyst for desulfurization conducted in Comparative Example 3, the conversion of the AR fraction was smaller and the yield of the intermediate fraction was also smaller although the conversion of the VR fraction was greater and the properties of the obtained desulfurized fuel oil were good.

### INDUSTRIAL APPLICABILITY

The catalyst for hydrocracking of heavy oil of the present invention exhibits excellent desulfurizing function and excellent activity for decomposition of fractions having a high boiling point of 525°C or higher such as the vacuum residue. Therefore, by using the above catalyst, heavy oil can be effectively converted into light fractions such as the kerosene and gas oil fraction and the naphtha fraction, and the residual heavy fraction can be efficiently converted into the gasoline fraction by an apparatus for fluidized catalytic cracking.

## Claims

1. A catalyst for hydrocracking of heavy oil which comprises a support comprising crystalline aluminosilicate and a porous inorganic oxide excluding the crystalline aluminosilicate and an active metal supported on the support, wherein
(a) the support comprises the crystalline aluminosilicate in an amount of 18% by mass or greater and smaller than 45% by mass and the porous inorganic oxide excluding the crystalline aluminosilicate in an amount exceeding 55% by mass and of 82% by mass or smaller based on a sum of the amount of the crystalline aluminosilicate and the amount of the porous inorganic aluminosilicate excluding the crystalline aluminosilicate, (b) the active metal is at least one metal selected from molybdenum, tungsten and nickel, and (c) a distribution of pores in the catalyst for hydrocracking of heavy oil is such that a volume of pores having a diameter of 500 to 10,000 Å is 10% or smaller and a volume of pores having a diameter of 100 to 200 Å is 60% or greater based on a volume of entire pores having a diameter of 50 to 10,000 Å.

2. A catalyst for hydrocracking of heavy oil according to Claim 1, which is used for a fixed bed hydrodesulfurization apparatus.

3. A catalyst for hydrocracking of heavy oil according to Claim 1, wherein the crystalline aluminosilicate is USY zeolite or USY zeolite supporting a metal, and a main component of the porous inorganic oxide is alumina.

4. A catalyst for hydrocracking of heavy oil according to Claim 1, wherein the crystalline aluminosilicate is USY zeolite supporting iron.
